Europäisches Patentamt

European Patent Office

Office européen des brevets

(11) Publication number: **0 289 859 B1**

## EUROPEAN PATENT SPECIFICATION

(45) Date of publication of patent specification: **01.04.92**   (51) Int. Cl.⁵: **C08J 9/28**, C08J 9/36, C08J 5/18, C08L 23/06

(21) Application number: **88106268.1**

(22) Date of filing: **20.04.88**

(54) **Printed microporous material.**

(30) Priority: **24.04.87 US 42404**

(43) Date of publication of application:
**09.11.88 Bulletin 88/45**

(45) Publication of the grant of the patent:
**01.04.92 Bulletin 92/14**

(84) Designated Contracting States:
**DE FR GB IT**

(56) References cited:
**EP-A- 0 193 318**
**GB-A- 2 083 823**
**US-A- 3 351 495**

(73) Proprietor: **PPG INDUSTRIES, INC.**
**One PPG Place**
**Pittsburgh Pennsylvania 15272(US)**

(72) Inventor: **Young, James**
**1205 N.W. Ridgewood Place**
**Corvallis Oregon 97330(US)**
Inventor: **Leatherman, Dennis Daniel**
**1451 Meteor Circle**
**Pittsburgh Pennsylvania 15241(US)**

(74) Representative: **Sternagel, Hans-Günther, Dr.**
**et al**
**Patentanwälte Dr. Michael Hann Dr. H.-G.**
**Sternagel Sander Aue 30**
**W-5060 Bergisch Gladbach 2(DE)**

**Description**

The present invention is directed to printing upon microporous material substrate wherein the substrate is characterized by a matrix of essentially linear ultrahigh molecular weight polyolefin, a very large proportion of finely divided particulate siliceous filler, and a high void content, and to the printed microporous material.

Accordingly, one embodiment of the invention is printed microporous material comprising (a) a microporous material substrate having at least one surface and comprising: (1) a matrix comprising essentially linear ultrahigh molecular weight polyolefin which is essentially linear ultrahigh molecular weight polyethylene having an intrinsic viscosity of at least 18 deciliters/gram, essentially linear ultrahigh molecular weight polypropylene having an intrinsic viscosity of at least 6 deciliters/gram, or a mixture thereof, (2) finely divided particulate substantially water-insoluble siliceous filler distributed throughout the matrix, the filler constituting from 50 percent to 90 percent by weight of the microporous material substrate, and (3) a network of interconnecting pores communicating throughout the microporous material substrate, the pores constituting at least 35 percent by volume of the microporous material substrate, and (b) printing ink on at least a portion of the surface in the form of indicia, one or more patterns, one or more designs, or a combination thereof.

Another embodiment of the invention is a method for producing printed microporous material comprising printing printing ink upon at least one surface of a microporous material substrate wherein the microporous material substrate comprises: (a) a matrix comprising essentially linear ultrahigh molecular weight polyolefin which is essentially linear ultrahigh molecular weight polyethylene having an intrinsic viscosity of at least 18 deciliters/gram, essentially linear ultrahigh molecular weight polypropylene having an intrinsic viscosity of at least 6 deciliters/gram, or a mixture thereof, (b) finely divided particulate substantially water-insoluble siliceous filler distributed throughout the matrix, the filler constituting from 50 percent to 90 percent by weight of the microporous material substrate, and (c) a network of interconnecting pores communicating throughout the microporous material substrate, the pores consisting at least 35 percent by volume of the microporous material substrate.

There are many advantages in using the microporous material described herein as a printing substrate.

One such advantage is that the substrate need not be pretreated with any of the pretreatments customarily used to improve adhesion between the printing ink and the polyolefin substrate such as flame treatment, chlorination, or especially corona discharge treatment which is most commonly employed. This is surprising inasmuch as untreated polyolefins such as polyethylene and polypropylene cannot ordinarily be successfully printed because of a lack of adhesion between the polyolefin printing ink and the polyolefin substrate. The microporous material substrates used in the present invention may be pretreated to further improve ink-substrate adhesion, but commercially satisfactory results can ordinarily be attained without employing such methods.

Another advantage is that the microporous material substrates accept a wide variety of printing inks, including most organic solvent-based inks which are incompatible with water, organic solvent-based inks which are compatible with water, and water-based inks.

Yet another advantage is very rapid drying of most inks to the tack-free stage upon printing the microporous material substrates. This advantage is quite important in high speed press runs, in multicolor printing, and in reducing or even eliminating blocking of stacks or coils of the printed substrate.

A further advantage is the sharpness of the printed image that can be attained. This is especially important in graphic arts applications where fine lines, detailed drawings, or halftone images are to be printed. Halftone images printed on the microporous material substrate ordinarily exhibit high degrees of dot resolution.

Ink jet printing, especially when a water-based ink jet printing ink is used, is particularly suitable for printing bar codes on microporous material substrates. The resulting bars are sharp and of high resolution, which are important factors in reducing errors when the codes are read by conventional methods and equipment. The ink dries very rapidly when applied, thereby minimizing loss of bar resolution due to smearing in subsequent handling operations.

Microporous material substrate, after being printed with water-based printing ink, has been washed and dried using a conventional household washer and a conventional household drier. It was observed upon completion of the washing and drying operations that the printed colors held fast with no significant fading.

Inasmuch as ultrahigh molecular weight (UHMW) polyolefin is not a thermoset polymer having an infinite molecular weight, it is technically classified as a thermoplastic. However, because the molecules are essentially very long chains, UHMW polyolefin, and especially UHMW polyethylene, softens when heated but does not flow as a molten liquid in a normal thermoplastic manner. The very long chains and the peculiar properties they provide to UHMW polyolefin are believed to contribute in large measure to the desirable properties of the microporous material substrate.

As indicated earlier, the intrinsic viscosity of the UHMW polyethylene is at least 18 deciliters/gram. In many cases the intrinsic viscosity is at least about 19 deciliters/gram. Although there is no particular restriction on the upper limit of the intrinsic viscosity, the intrinsic viscosity is frequently in the range of from 18 to 39 deciliters/gram. An intrinsic viscosity in the range of from about 18 to about 32 deciliters/gram is preferred.

Also as indicated earlier the intrinsic viscosity of the UHMW polypropylene is at least 6 deciliters/gram. In many cases the intrinsic viscosity is at least about 7 deciliters/gram. Although there is no particular restriction on the upper limit of the intrinsic viscosity, the intrinsic viscosity is often in the range of from about 6 to about 18 deciliters/gram. An intrinsic viscosity in the range of from about 7 to about 16 deciliters/gram is preferred.

As used herein and in the claims, intrinsic viscosity is determined by extrapolating to zero concentration the reduced viscosities or the inherent viscosities of several dilute solutions of the UHMW polyolefin where the solvent is freshly distilled decahydronaphthalene to which 0.2 percent by weight, 3,5-di-tert-butyl-4-hydroxyhydrocinnamic acid, neopentanetetrayl ester [CAS Registry No. 6683-19-8] has been added. The reduced viscosities or the inherent viscosities of the UHMW polyolefin are ascertained from relative viscosities obtained at 135°C. using an Ubbelohde No. 1 viscometer in accordance with the general procedures of ASTM D 4020-81, except that several dilute solutions of differing concentration are employed.

The nominal molecular weight of UHMW polyethylene is empirically related to the intrinsic viscosity of the polymer according to the equation:

$$M = 5.37 \times 10^4 \ [\eta]^{1.37}$$

where M is the nominal molecular weight and $[\eta]$ is the intrinsic viscosity of the UHMW polyethylene expressed in deciliters/gram. Similarly, the nominal molecular weight of UHMW polypropylene is empirically related to the intrinsic viscosity of the polymer according to the equation:

$$M = 8.88 \times 10^4 \ [\eta]^{1.25}$$

where M is the nominal molecular weight and $[\eta]$ is the intrinsic viscosity of the UHMW polypropylene expressed in deciliters/gram.

The essentially linear ultrahigh molecular weight polypropylene is most frequently essentially linear ultrahigh molecular weight isotactic polypropylene. Often the degree of isotacicity of such polymer is at least about 95 percent, while preferably it is at least about 98 percent.

Sufficient UHMW polyolefin should be present in the matrix to provide its properties to the microporous material substrate. Other thermoplastic organic polymer may also be present in the matrix so long as its presence does not materially affect the properties of the microporous material substrate in an adverse manner. The amount of the other thermoplastic polymer which may be present depends upon the nature of such polymer. In general, a greater amount of other thermoplastic organic polymer may be used if the molecular structure contains little branching, few long sidechains, and few bulky side groups, than when there is a large amount of branching, many long sidechains, or many bulky side groups. For this reason, the preferred thermoplastic organic polymers which may optionally be present are low density polyethylene, high density polyethylene, poly(tetrafluoroethylene), polypropylene, copolymers of ethylene and propylene, copolymers of ethylene and acrylic acid, and copolymers of ethylene and methacrylic acid. If desired, all or a portion of the carboxyl groups of carboxyl-containing copolymers may be neutralized with sodium, zinc or the like. It is our experience that usually at least about 70 percent UHMW polyolefin, based on the weight of the matrix, will provide the desired properties to the microporous material. In most cases, however, it is preferred that the other thermoplastic organic polymer be substantially absent.

The finely divided substantially water-insoluble siliceous filler used in the present invention is particulate. As present in the microporous material substrate, the filler may be in the form of ultimate particles, aggregates of ultimate particles, or a combination of both. In most cases, at least about 90 percent by weight of the filler used in preparing the microporous material substrate has gross particle sizes in the range of from about 5 to about 40 micrometers as determined by use of a Model TAII Coulter counter (Coulter Electronics, Inc.) according to ASTM C 690-80 but modified by stirring the filler for 10 minutes in Isoton II electrolyte (Curtin Matheson Scientific, Inc.) using a four-blade, 4.445 centimeter diameter propeller stirrer. Preferably at least about 90 percent by weight of the filler has gross particle sizes in the range of

3

from about 10 to about 30 micrometers. It is expected that the sizes of filler agglomerates will be reduced during processing of the ingredients to prepare the microporous material substrate. Accordingly, the distribution of gross particle sizes in the microporous material substrate may be smaller than in the raw filler itself.

Examples of suitable siliceous fillers include silica, mica, montmorillonite, kaolinite, asbestos, talc, diatomaceous earth, vermiculite, natural and synthetic zeolites, cement, calcium silicate, aluminum silicate, sodium aluminum silicate, aluminum polysilicate, alumina silica gels, and glass particles. In addition to the siliceous fillers other finely divided particulate substantially water-insoluble fillers may also be employed. Example of such optional fillers include carbon black, charcoal, graphite, titanium oxide, iron oxide, copper oxide, zinc oxide, antimony oxide, zirconia, magnesia, alumina, molybolenum disulfide, zinc sulfide, barium sulfate, strontium sulfate, calcium carbonate, and magnesium carbonate.

Silica and the clays are the preferred siliceous fillers. Of the silicas, precipitated silica, silica gel, or fumed silica is most often used.

The particularly preferred finely divided particulate substantially water-insoluble siliceous filler is precipitated silica. Although both are silicas, it is important to distinguish precipitated silica from silica gel inasmuch as these different materials have different properties. Reference in this regard is made to R. K. Iler, The Chemistry of Silica, John Wiley & Sons, New York (1979), Library of Congress Catalog No. QD 181.S6144. Note especially pages 15-29, 172-176, 218-233, 364-365, 462-465, 554-564, and 578-579. Silica gel is usually produced commercially at low pH by acidifying an aqueous solution of a soluble metal silicate, typically sodium silicate, with acid. The acid employed is generally a strong mineral acid such as sulfuric acid or hydrochloric acid although carbon dioxide is sometimes used. Inasmuch as there is essentially no difference in density between gel phase and the surrounding liquid phase while the viscosity is low, the gel phase does not settle out, that is to say, it does not precipitate. Silica gel, then, may be described as a nonprecipitated, coherent, rigid, three-dimensional network of contiguous particles of colloidal amorphous silica. The state of subdivision ranges from large, solid masses to submicroscopic particles, and the degree of hydration from almost anhydrous silica to soft gelatinous masses containing on the the order of 100 parts of water per part of silica by weight, although the highly hydrated forms are only rarely used in the present invention.

Precipitated silica is usually produced commercially by combining an aqueous solution of a soluble metal silicate, ordinarily alkali metal silicate such as sodium silicate, and an acid so that colloidal particles will grow in weakly alkaline solution and be coagulated by the alkali metal ions of the resulting soluble alkali metal salt. Various acid may be used, including the mineral acids, but the preferred acid is carbon dioxide. In the absence of a coagulant, silica is not precipitated from solution at any pH. The coagulant used to effect precipitation may be the soluble alkali metal salt produced during formation of the colloidal silica particles, it may be added electrolyte such as a soluble inorganic or organic salt, or it may be a combination of both.

Precipitated silica, then, may be described as precipitated aggregates of ultimate particles of colloidal amorphous silica that have not at any point existed as macroscopic gel during the preparation. The sizes of the aggregates and the degree of hydration may vary widely.

Precipitated silica powders differ from silica gels that have been pulverized in ordinarily having a more open structure, that is, a higher specific pore volume. However, the specific surface area of precipitated silica as measured by the Brunauer, Emmet, Teller (BET) method using nitrogen as the adsorbate, is often lower than that of silica gel.

Many different precipitated silicas may be employed in the present invention, but the preferred precipitated silicas are those obtained by precipitation from an aqueous solution of sodium silicate using a suitable acid such as sulfuric acid, hydrochloric acid, or carbon dioxide. Such precipitated silicas are themselves known and processes for producing them are described in detail in the United States Patent No. 2,940,830 and in West German Offenlegungsschrift 35 45 615, including especially the processes for making precipitated silicas and the properties of the products.

In the case of the preferred filler, precipitated silica, the average ultimate particle size (irrespective of whether or not the ultimate particles are agglomerated) is less than 0.1 micrometer as determined by transmission electron microscopy. Often the average ultimate particle size is less than about 0.05 micrometer. Preferably the average ultimate particle size of the precipitated silica is less than about 0.03 micrometer.

The finely divided particulate substantially water-insoluble siliceous filler constitutes from 50 to 90 percent by weight of the microporous material substrate. Frequently such filler constitutes from 50 to 85 percent by weight of the microporous material substrate. From about 60 percent to about 80 percent by weight is preferred.

Minor amounts, usually less than about 5 percent by weight, of other materials used in processing such as lubricant, processing plasticizer, organic extraction liquid, surfactant, water, and the like, may optionally also be present. Yet other materials introduced for particular purposes may optionally be present in the microporous material substrate in small amounts, usually less than about 15 percent by weight. Examples of such materials include antioxidants, ultraviolet light absorbers, flame retardants, reinforcing fibers such as chopped glass fiber strand, dyes, pigments, and the like. The balance of the microporous material substrate, exclusive of filler and any impregnant applied for one or more special purposes is essentially the thermoplastic organic polymer.

On an impregnant-free basis, pores constitute at least 35 percent by volume of the microporous material substrate. In many instances the pores constitute at least 60 percent by volume of the microporous material substrate. Often the pores constitute from at least about 35 percent to about 95 percent by volume of the microporous material. From about 60 percent to about 75 percent by volume is preferred. As used herein and in the claims, the porosity (also known as void volume) of the microporous material substrate, expressed as percent by volume, is determined according to the equation:

$$\text{Porosity} = 100[1 - d_1/d_2]$$

where $d_1$ is the density of the sample which is determined from the sample weight and the sample volume as ascertained from measurements of the sample dimensions and $d_2$ is the density of the solid portion of the sample which is determined from the sample weight and the volume of the solid portion of the sample. The volume of the solid portion of the same is determined using a Quantachrome stereopycnometer (Quantachrome Corp.) in accordance with the accompanying operating manual.

The volume average diameter of the pores of the microporous material substrate is determined by mercury porosimetry using an Autoscan mercury porosimeter (Quantachrome Corp.) in accordance with the accompanying operating manual. The volume average pore radius for a single scan is automatically determined by the porosimeter. In operating the porosimeter, a scan is made in the high pressure range (from about 138 kilopascals absolute to about 227 megapascals absolute). If about 2 percent or less of the total intruded volume occurs at the low end (from about 138 to about 250 kilopascals absolute) of the high pressure range, the volume average pore diameter is taken as twice the volume average pore radius determined by the porosimeter. Otherwise, an additional scan is made in the low pressure range (from about 7 to about 165 kilopascals absolute) and the volume average pore diameter is calculated according to the equation:

$$d = 2 \left( \frac{v_1 r_1}{w_1} + \frac{v_2 r_2}{w_2} \right) \bigg/ \left( \frac{v_1}{w_1} + \frac{v_2}{w_2} \right)$$

where $d$ is the volume average pore diameter, $v_1$ is the total volume of mercury intruded in the high pressure range, $v_2$ is the total volume of mercury intruded in the low pressure range, $r_1$ is the volume average pore radius determined from the high pressure scan, $r_2$ is the volume average pore radius determined from the low pressure scan, $w_1$ is the weight of the sample subjected to the high pressure scan, and $w_2$ is the weight of the sample subjected to the low pressure scan. Generally the volume average diameter of the pores is in the range of from 0.02 to 50 micrometers. Very often the volume average diameter of the pores is in the range of from about 0.04 to about 40 micrometers. From about 0.05 to about 30 micrometers is preferred.

In the course of determining the volume average pore diameter of the above procedure, the maximum pore radius detected is sometimes noted. This is taken from the low pressure range scan if run; otherwise it is taken from the high pressure range scan. The maximum pore diameter is twice the maximum pore radius.

Microporous material substrate may be produced according to the general principles and procedures of United States Patent No. 3,351,495, including especially the processes for making microporous materials and the properties of the products.

Preferably filler, thermoplastic organic polymer powder, processing plasticizer and minor amounts of lubricant and antioxidant are mixed until a substantially uniform mixture is obtained. The weight ratio of filler to polymer powder employed in forming the mixture is essentially the same as that of the microporous material substrate to be produced. The mixture, together with additional processing plasticizer, is introduced to the heated barrel of a screw extruder. Attached to the extruder is a sheeting die. A continuous sheet formed by the die is forwarded without drawing to a pair of heated calender rolls acting cooperatively to form continuous sheet of lesser thickness than the continuous sheet exiting from the die. The continuous sheet from the calender then passes to a first extraction zone where the processing plasticizer is substantialy removed by extraction with an organic liquid which is a good solvent for the processing plasticizer, a poor solvent for the organic polymer, and more volatile than the processing plasticizer. Usually, but not necessarily, both the processing plasticizer and the organic extraction liquid are substantially immiscible with water. The continuous sheet then passes to a second extraction zone where the residual organic extraction liquid is substantially removed by steam and/or water. The continuous sheet is then passed through a forced air dryer for substantial removal of residual water and remaining residual organic extraction liquid. From the dryer the continuous sheet, which is microporous material substrate, is passed to a take-up roll.

The processing plasticizer has little solvating effect on the thermoplastic organic polymer at 60°C., only a moderate solvating effect at elevated temperatures on the order of about 100°C, and a significant solvating effect at elevated temperatures on the order of about 200°C. It is a liquid at room temperature and usually it is processing oil such as paraffinic oil, naphthenic oil, or aromatic oil. Suitable processing oils include those meeting the requirements of ASTM D 2226-82, Types 103 and 104. Preferred are those oils which have a pour point of less than 22°C. according to ASTM D 97-66 (reapproved 1978). Particularly preferred are oils having a pour point of less than 10°C. Examples of suitable oils include Shellflex® 412 and Shellflex® 371 oil (Shell Oil Co.) which are solvent refined and hydrotreated oils derived from naphthenic crude. It is expected that other materials, including the phthalate ester plasticizers such as dibutyl phthalate, bis(2-ethylhexyl) phthalate, diisodecyl phthalate, dicyclohexyl phthalate, butyl benzyl phthalate, and ditridecyl phthalate will function satisfactorily as processing plasticizers.

There are many organic extraction liquids that can be used. Examples of suitable organic extraction liquids include 1,1,2-trichloroethylene, perchloroethylene, 1,2-dichloroethane, 1,1,1-trichloroethane, 1,1,2-trichloroethane, methylene chloride, chloroform, isopropyl alcohol, diethyl ether and acetone.

In the above described process for producing microporous material substrate, extrusion and calendering are facilitated when the substantially water-insoluble filler carries much of the processing plasticizer. The capacity of the filler particles to absorb and hold the processing plasticizer is a function of the surface area of the filler. It is therefore preferred that the fillers have a high surface area. High surface area fillers are materials of very small particle size, materials having a high degree of porosity or materials exhibiting both characteristics. Usually the surface area of the filler itself is in the range of from about 20 to about 400 square meters per gram as determined by the Brunauer, Emmett, Teller (BET) method according to ASTM C 819-77 using nitrogen as the adsorbate but modified by outgassing the system and the sample for one hour at 130°C. Preferably the surface area is in the range of from about 25 to 350 square meters per gram.

Inasmuch as it is desirable to essentially retain the filler in the microporous material substrate, it is preferred that the substantially water-insoluble filler be substantially insoluble in the processing plasticizer and substantially insoluble in the organic extraction liquid when microporous material substrate is produced by the above process.

The residual processing plasticizer content is usually less than 5 percent by weight of the microporous sheet substrate and this may be reduced even further by additional extractions using the same or a different organic extraction liquid.

Pores constitute from about 35 to about 80 percent by volume of the microporous material substrate when made by the above-described process. In many cases the pores constitute from about 60 to about 75 percent by volume of the microporous material substrate.

The volume average diameter of the pores of the microporous material substrate when made by the above-described process, is usually in the range of from 0.02 to 0.5 micrometers. Frequently the average diameter of the pores is in the range of from about 0.04 to about 0.3 micrometers. From about 0.05 to about 0.25 micrometers is preferred.

The microporous material produced by the above-described process may be used as a substrate for printing. However, it may optionally be stretched and the stretched microporous material used as a substrate for printing. When such stretching is employed, the product of the above-described process may be regarded as an intermediate product.

It will be appreciated that the stretching both increases the void volume of the material and induces regions of molecular orientation in the ultrahigh molecular weight (UHMW) polyolefin. As is well known in the art, many of the physical properties of molecularly oriented thermoplastic organic polymer, including tensile strength, tensile modulus, Young's modulus, and others, differ considerably from those of the corresponding thermoplastic organic polymer having little or no molecular orientation. Although it is not desired to be bound by any theory, it is believed that the properties of the UHMW polyolefin, the regions of molecular orientation, the high levels of filler loading, the high degrees of porosity cooperate to provide many of the desirable properties charcteristic of the stretched microporous material substrates used in the present invention.

Stretched microporous material substrate may be produced by stretching the intermediate product in at least one stretching direction above the elastic limit. Usually the stretch ratio is at least about 1.5. In many cases the stretch ratio is at least about 1.7. Preferably it is at least about 2. Frequently the stretch ratio is in the range of from about 1.5 to about 15. Often the stretch ratio is in the range of from about 1.7 to about 10. Preferably the stretch ratio is in the range of from about 2 to about 6. As used herein, the stretch ratio is determined by the formula:

$$S = L_2/L_1$$

where $S$ is the stretch ratio, $L_1$ is the distance between two reference points located on the intermediate product and on a line parallel to the stretching direction, and $L_2$ is the distance between the same two reference points located on the stretched microporous material.

The temperatures at which stretching is accomplished may vary widely. In most cases, the stretching temperatures are in the range of from about 20°C. to about 450°C. Often such temperatures are in the range of from about 50°C. to about 400°C. From about 100°C. to about 375°C. is preferred.

Stretching may be accomplished in a single step or a plurality of steps as desired. For example, when the intermediate product is to be stretched in a single direction (uniaxial stretching), the stretching may be accomplished by a single stretching step or a sequence of stretching steps until the desired final stretch ratio is attained. Similarly, when the intermediate product is to be stretched in two directions (biaxial stretching), the stretching can be conducted by a single biaxial stretching step or a sequence of biaxial stretching steps until the desired final stretch ratios are attained. Biaxial stretching may also be accomplished by a sequence of one or more uniaxial stretching steps in one direction and one or more uniaxial stretching steps in another direction. Biaxial stretching steps where the intermediate product is stretched simultaneously in two directions and uniaxial stretching steps may be conducted in sequence in any order. Stretching in more than two directions is within contemplation. It may be seen that the various permutations of steps are quite numerous. Other steps, such as cooling, heating, sintering, annealing, reeling, unreeling, and the like, may optionally be included in the overall process as desired.

Various types of stretching apparatus are well known and may be used to accomplish stretching of the intermediate product. Uniaxial stretching is usually accomplished by stretching between two rollers wherein the second or downstream roller rotates at a greater peripheral speed than the first or upstream roller. Uniaxial stretching can also be accomplished on a standard tentering machine. Biaxial stretching may be accomplished by simultaneously stretching in two different directions on a tentering machine. More commonly, however, biaxial stretching is accomplished by first uniaxially stretching between two differentially rotating rollers as described above, followed by either uniaxially stretching in a different direction using a tenter machine or by biaxially stretching using a tenter machine. The most common type of biaxial stretching is where the two stretching directions are approximately at right angles to each other. In most cases where continuous sheet is being stretched, one stretching direction is at least approximately parallel to the long axis of the sheet (machine direction) and the other stretching direction is at least approximately perpendicular to the machine direction and is in the plane of the sheet (transverse direction).

After stretching has been accomplished, the microporous material may optionally be sintered, annealed, heat set and/or otherwise heat treated. During these optional steps, the stretched microporous material is usually held under tension so that it will not markedly shrink at the elevated temperatures employed, although some relaxation amounting to a small fraction of the maximum stretch ratio is frequently permitted.

Following stretching and any heat treatments employed, tension is released from the stretched microporous material after the microporous material has been brought to a temperature at which, except for a small amount of elastic recovery amounting to a small fraction of the stretch ratio, it is essentially dimensionally stable in the absence of tension. Elastic recovery under these conditions usually does not amount to more than about 10 percent of the stretch ratio.

The stretched microporous material may then be further processed as desired. Examples of such further processing steps include reeling, cutting, stacking, treatment to remove residual processing plasticizer or extraction solvent, impregnation with various materials, fabrication into shapes for various end uses, and lamination to one or more backings of reinforcing fibers such as woven fabrics, knitted fabrics, or mats. The preferred reinforcing fibers are glass fibers, particularly in the form of glass fiber cloth or glass fiber mat.

In all cases, the porosity of the stretched microporous material is, unless impregnated after stretching, greater than that of the intermediate product. On an impregnant-free basis, pores usually constitute more than 80 percent by volume of the stretched microporous material. In many instances the pores constitute at least about 85 percent by volume of the stretched microporous material. Often the pores constitute from more than 80 percent to about 95 percent by volume of the stretched microporous material. From about 85 percent to about 95 percent by volume is preferred.

Generally the volume average diameter of the pores of the stretched microporous material is in the range of from 0.6 to about 50 micrometers. Very often the volume average diameter of the pores is in the range of from about 1 to about 40 micrometers. From about 2 to about 30 micrometers is preferred.

Microporous material substrate, whether or not stretched, may be printed with a variety of printing inks using a wide variety of printing processes. Both the printing inks and the printing processes are themselves conventional.

One class of printing processes that can be used is typographic printing where ink is placed on macroscopically raised areas of the printing plate. Examples of typographic processes include rubber-stamp printing, letterpress printing, flexography, and letterset printing which is also known as dry offset printing and as offset letterpress printing.

Another class of printing suitable for use is intaglio printing, also known as gravure printing, where ink is placed on depressed areas of the printing plate.

Yet another class of printing processes suitable for use is planographic printing where ink is placed on localized regions of a printing plate that is either smooth or contains only microscopically raised areas. A subclass of particular interest is lithography, which includes several variations. Conventional lithography uses oil-based inks while reverse lithography uses water-based inks. In direct lithography (whether conventional or reverse), printing ink is applied to the substrate directly from the lithographic printing plate. In offset lithography (whether conventional or reverse), the printing ink is transferred first from the lithographic printing plate to a printing blanket and then from the printing blanket to the substrate. Other types of planographic printing include collotype printing, autotype printing, hectograph printing, and xerography.

Another class of printing processes that can be used is stencil printing, including screen printing and mimeograph printing.

Various miscellaneous printing processes that can be used include typewriting and dot matrix printing, both of which may be considered as typographic in principle. Another example of a miscellaneous printing process is ink jet printing.

Of the printing processes, lithography and letterpress printing are most often used. Of the lithographic processes, offset lithography is preferred, expecially when the lithography is conventional lithography.

The microporous substrate is suitable for line printing, halftone printing, and continuous tone printing.

When more than a few copies are to be produced, printing is usually accomplished using a printing press. The three general types commonly used for printing flat substrates are the platen press, the flat-bed cylinder press, and the rotary press. The rotary press, which may be sheet fed or web fed, is most often used.

There are many differences in printing inks, some physical and some chemical. Consequently there is a wide variety of systems for classifying inks depending upon which similarities and differences it is desired to emphasize. Most inks used for printing are liquids or pastes, that is, the vehicle before drying contains a liquid. There are a few exceptions such as xerographic printing ink also known as toner, which is dry. Oil-based and most organic solvent based inks are not compatible with water, whereas water-based inks are not ordinarily compatible with oil. Inks usually dry by evaporation of liquid, by adsorption of liquid into the substrate, by crosslinking of the binder, by cooling or by a combination of two or more of these. Other systems of classification are based on the type of binder, such as rubber-based, drying oil based, non-drying oil based, natural resin-based, gilsonite-based, asphaltic-based, synthetic resin-based, and the like. Yet another classification system is based upon viscosity of the ink. Still another is based upon the types of colorant which may be present, such as pigment-based, toner-based, dye-based, pigment and dye based, clear, and the like. Other systems are based upon the printing processes employed for deposition of the ink on the substrate.

In keeping with customary usage, the term "printing ink" is used herein with reference to the ink composition employed in printing and with reference to the printed composition on the substrate, whether before drying or after drying, partial drying, or hardening. The correct usage will be obvious from the context or expressly stated.

Printing processes, printing equipment, and printing inks have been extensively discussed and documented. Examples of reference works that may be consulted include L. M. Larsen, Industrial Printing Ink, Reinhold Publishing Corp., (1962); Kirk-Othmer, Encyclopedia of Chemical Technology, 2d Ed., John Wiley & Sons, Inc., Vol. 11, p 611-632 (1966) and Vol. 16, pages 494-546 (1968); and R. N. Blair, The Lithographers Manual,The Graphic Arts Technical Foundation, Inc., 7th Ed. (1983).

The invention is further described in conjunction with the following examples which are to be considered illustrative rather than limiting.

EXAMPLES

Microporous Material Substrate Formation

The preparation of the above described materials is illustrated by the following descriptive examples. Processing oil was used as the processing plasticizer. Silica, polymer, lubricant and antioxidant in the amount specified in Table I were placed in a high intensity mixer and mixed at high speed for 30 seconds to thoroughly blend the dry ingredients. The processing oil needed to formulate the batch was pumped into the mixer over a period of 2-3 minutes with low speed agitation. After the completion of the processing oil addition a 2 minute low speed mix period was used to distribute the processing oil uniformly throughout the mixture.

## Table I

### Formulations

| Example | 1 & 1A | 2 | 3 | 4 | 5 | 6 | 7 |
|---|---|---|---|---|---|---|---|
| **Ingredient** | | | | | | | |
| UHMWPE (1), kg | 5.67 | 9.98 | 4.25 | 8.57 | 6.12 | 9.98 | 3.49 |
| Polypropylene (2), kg | 0 | 0 | 1.42 | 0 | 0 | 0 | 0 |
| Precipitated Silica (3),kg | 19.96 | 19.96 | 19.96 | 19.96 | 13.02 | 9.98 | 19.96 |
| Silica Gel, kg | 0 | 0 | 0 | 0 | 6.49 | 0 | 0 |
| Clay, kg | 0 | 0 | 0 | 9.98 | 0 | 0 | 0 |
| Lubricant (4), g | 100 | 100 | 100 | 100 | 100 | 50 | 100 |
| Antioxidant (5), g | 100 | 100 | 100 | 100 | 100 | 50 | 100 |
| Processing Oil (6), kg | | | | | | | |
| in Batch | 31.21 | 31.21 | 31.21 | 37.58 | 33.44 | 16.89 | 31.72 |
| at Extruder | 13.61 | 41.59 | 30.39 | 28.60 | ~ 14 | 18.72 | 13.61 |

(1)  UHMWPE = Ultrahigh Molecular Weight Polyethylene, Himont 1900, Himont, U.S.A., Inc.

(2)  Profax© 6801, Himont U.S.A., Inc.

(3)  HiSil® SBG, PPG Industries, Inc.

(4)  Petrac® CZ81, Desoto, Inc., Chemical Speciality Division

(5)  Irganox® B-215, Ciba-Geigy Corp.

(6)  Shellflex® 412, Shell Chemical Co.

The batch was then conveyed to a ribbon blender where usually it was mixed with up to two additional batches of the same composition. Material was fed from the ribbon blender to a twin screw extruder by a variable rate screw feeder. Additional processing oil was added via a metering pump into the feed throat of the extruder. The extruder mixed and melted the formulation and extruded it through a 76.2 centimeter x 0.3175 centimeter slot die. The extruded sheet was then calendered. The hot, calendered sheet was then passed around a chill roll to cool the sheet. The rough edges of the cooled calendered sheet were trimmed by rotary knives to the desired width.

The oil filled sheet was conveyed to the extractor unit where it was contacted by both liquid and vaporized 1,1,2-trichloroethylene (TCE). The sheet was transported over a series of rollers in a serpentine fashion to provide multiple, sequential vapor/liquid/vapor contacts. The extraction liquid in the sump was maintained at a temperature of 65-88°C. Overflow from the sump of the TCE extractor was returned to a still which recovered the TCE and the processing oil for reuse in the process. The bulk of the TCE was extracted from the sheet by steam as the sheet was passed through a second extractor unit. A description of these types of extractors may be found in European Patent Application Publication No. EP 0 191 615, including especially the structures of the devices and their modes of operation. The sheet was dried by radiant heat and convective air flow. The dried sheet was wound on cores to provide roll stock for further processing.

The microporous sheets, as well as the hereinafter described biaxially stretched microporous sheets produced therefrom, were tested for various physical properties. Table II identifies the properties with the methods used for their determination. The various ASTM and TAPPI test methods and Method 502 C, are referenced in Table II. The results of physical testing of the unstretched microporous sheets are shown in Table III.

Property values indicated by MD (machine direction) were obtained on samples whose major axis was oriented along the length of the sheet. TD (transverse direction; cross machine direction) properties were obtained from samples whose major axis was oriented across the sheet.

Table II

| Physical Test Methods | |
|---|---|
| Property | Test Method |
| Tensile Strength Elongation | ASTM D 412-83. |
| Porosity | As described in the text above. |
| Matrix Tensile Strength | Tensile Strength determined in accordance with ASTM D 412-83 multiplied by the quantity 100/(100-Porosity). |
| Tear Strength, Die C | ASTM D 624-81. |
| Processing Oil Content | Method 502 C in "Standard Methods for the Examination of Water and Wastewater", 14th Ed., APHA-AWWA-WPCF (1975). |
| Maximum Pore Diameter | Mercury Porosimetry, as described in the text above. |
| Volume Average Pore Diameter | Mercury Porosimetry, as described in the text above. |
| Gurley Air Flow | ASTM D 726-58 (reapproved 1971), Method A. |
| Opacity | TAPPI Standard T 425 (Contrast Ratio) using Illuminant C instead of Illuminant A. |
| Brightness | TAPPI Standard T 452. |
| Mullens Hydrostatic Resistance | ASTM D 751-79, Sec. 30-34, Method A. |
| MVTR (Moisture Vapor Transmission Rate) | ASTM E 96-80. |
| Methanol Bubble Pressure | ASTM F 316-80, using methanol. |
| Maximum Limiting Pore Diameter | ASTM F316-80, using methanol where $c_\gamma = 22.34\ (\mu\,m)(kPa)$. |
| Heat Shrinkage | ASTM D 1204-84, using 15.24 cm x 20.32 cm sample, 1 hr at 100°C. |

Table III

Physical Properties of Microporous Sheet

| Example No. | 1 | 1A | 2 | 3 | 4 | 5 | 6 | 7 |
|---|---|---|---|---|---|---|---|---|
| Thickness, mm | 0.229 | 0.279 | 0.279 | 0.229 | 0.381 | 0.483 | 0.254 | 0.229 |
| Matrix Tensile Strength, MPa | | | | | | | | |
| MD | 23.82 | 25.42 | 34.33 | 25.66 | | 29.44 | | 20.35 |
| TD | 9.94 | 12.00 | 14.91 | 10.38 | | 15.67 | | 5.97 |
| Elongation at break, % | | | | | | | | |
| MD | 250 | 375 | 279 | 227 | | | 14 | 110 |
| TD | 108 | 339 | 140 | 112 | 546 | 470 | 482 | 214 |
| Tear Strength, kN/m | | | | | | | | |
| MD | 36.25 | 35.03 | 61.47 | 47.81 | 56.39 | 57.09 | 93.34 | 24.52 |
| TD | 18.04 | 21.19 | 39.93 | 23.12 | 39.75 | 32.22 | 89.66 | 7.36 |
| Porosity, vol % | 71 | 71 | 66 | 68 | | 59.6 | | 77 |
| Processing Oil Content, wt% | 4.1 | 4.1 | 2.7 | 2.4 | | | | |
| Maximum Pore Diameter, $\mu$ m | 0.86 | | 0.30 | 0.28 | 1.34 | 6.11 | 0.16 | |
| Volume Average Pore Diameter, µm | 0.11 | | 0.065 | 0.069 | 0.099 | 0.111 | 0.12 | |

Table III (continued)

Physical Properties of Microporous Sheet

| Example No. | 1 | 1A | 2 | 3 | 4 | 5 | 6 | 7 |
|---|---|---|---|---|---|---|---|---|
| Gurley Air Flow, sec/100cc | 904 | | | 955 | | | | 422 |
| Opacity, % | 96.0 | 96.0 | 95.1 | 94.4 | 99.9 | 99.7 | 98.0 | 92.2 |
| Brightness% | 87.8 | 87.7 | 92.6 | 92.0 | 83.9 | 88.7 | 93.3 | 91.5 |

Biaxial Stretching of Microporous Sheet

Portions of the microporous materials produced in Examples 1-3 were unwound from cores and biaxially stretched by first uniaxially stretching in the machine direction using a single stage roll-to-roll machine direction stretching (MDS) unit and then essentially uniaxially stretching in the transverse direction using a moving clip tenter frame as a transverse direction stretching (TDS) unit. A preheat roll was employed with the MDS unit to heat the sheet prior to stretching. In the TDS unit, the sheet was heated by infrared radiant heaters and the temperature was controlled in banks to provide a temperature profile along the length of the sheet and substantially constant film temperature across the sheet at any point. For a description of a typical TDS unit, see Figure 2 and column 2, lines 43-69, of United States Patent No. 2,823,421. The MDS stretch ratio was varied by controlling the relative peripheral speeds of the feed rolls and the takeoff rolls of the MDS unit. The chain track positions in the tenter frame were set to achieve the desired stretch ratio and then to essentially maintain that stretch ratio during sintering. For each of the Examples 8-29, the settings of one of the last four vertical columns in Table IV were employed. The correct column may be ascertained by matching up the TD stretch ratio of the example with the final stretch ratio of the column.

## Table IV
### Transverse Direction Stretching

| Zone | Cumulative Length Along Tenter Frame Track, meters | Transverse Stretch Ratio | | | |
|------|------|------|------|------|------|
| | 0 | 1 | 1 | 1 | 1 |
| Preheat | | | | | |
| | 3.048 | 1 | 1 | 1 | 1 |
| Stretch I | | | | | |
| | 6.858 | 1.25 | 1.5 | 2 | 2.5 |
| Stretch II | | | | | |
| | 10.668 | 2.5 | 3 | 4 | 5 |
| Sinter I | | | | | |
| | 13.716 | 2.5 | 3 | 4 | 5 |
| Sinter II | | | | | |
| | 16.764 | 2.5 | 3 | 4 | 5 |

The microporous sheet stock of Examples 1-3 was fed over the preheat roll of the MDS unit which was heated to the temperature indicated in Tables V-VII. The sheet was then stretched to the indicated stretch ratio by maintaining the relative peripheral speeds of the second and first stretch rolls at essentially the same ratio as the stretch ratio. The line speed given in Tables V-VII is the output speed of the MDS unit and the machine direction speed of the TDS unit. The linear feed rate from the roll stock of microporous material to the MDS unit was set at a value given by the line speed divided by the MDS stretch ratio. Thus, with a line speed of 24 m/min and a MDS stretch ratio of 2, the linear feed rate from the roll stock of the MDS unit would be 12 m/min. The properties of several representative examples of biaxially stretched sheets are given in Tables V-VII.

Table V

Properties of Biaxially Stretched Microporous Sheets

Produced from Microporous Sheet of Example 1

| Example No. | 8 | 9 | 10 | 11 | 12 | 13 | 14 | 15 | 16 |
|---|---|---|---|---|---|---|---|---|---|
| Thickness, mm | 0.178 | 0.152 | 0.127 | 0.076 | 0.076 | 0.102 |  | 0.102 | 0.076 |
| Stretch Ratio | | | | | | | | | |
| MD | 2 | 2 | 2 | 2 | 3 | 3 | 3 | 3 | 3 |
| TD | 3 | 3 | 4 | 5 | 3 | 3 | 3 | 3 | 4 |
| Line Speed m/min | 48.8 | 24.4 | 24.4 | 24.4 | 24.4 | 24.4 | 24.4 | 24.4 | 24.4 |
| MDS Preheat Temp., °C | 79 | 79 | 79 | 79 | 79 | 79 | 79 | 79 | 79 |
| TDS Zone Temp, °C | | | | | | | | | |
| Preheat | 149 | 177 | 177 | 149 | 149 | 149 | 177 | 149 | 177 |
| Stretch I | | | | | | | | | |
| 177-166-177 | | | | | | | X | | X |
| 193-182-18 | | X | X | | | | | | |
| 193-185-193 | X | | | X | X | X | | X | |
| Stretch II, Sinter I | | | | | | | | | |
| 149-127-149 | | X | X | | | | X | | X |
| 149-149-149 | X | | | X | X | X | | X | |
| Sinter II | | | | | | | | | |
| 149-149-149 | | | | | X | | | | |
| 204-204-204 | X | | | X | | X | | | |
| 232-204-232 | | X | X | | | | X | | X |
| 260-260-260 | | | | | | | | X | |
| Weight, g/m$^2$ | 27 | 24 | 17 | 14 | 14 | 10 | 14 | 14 | 10 |
| Porosity, vol% | 91 | 90 | 92 | 90 | 89 | 93 | 93 | 93 | 91 |
| Matrix Tensile Strength, MPa | | | | | | | | | |
| MD | 53.70 | 32.96 | 40.25 | 25.30 | 29.52 | 62.74 | 67.77 | 41.96 | 56.69 |
| TD | 40.14 | 29.30 | 65.76 | 46.54 | 61.99 | 45.41 | 43.93 | 57.62 | 55.77 |

Table V (continued)
Properties of Biaxially Stretched Microporous Sheets
Produced from Microporous Sheet of Example 1

| Example No. | 8 | 9 | 10 | 11 | 12 | 13 | 14 | 15 | 16 |
|---|---|---|---|---|---|---|---|---|---|
| Elongation at break, % | | | | | | | | | |
| MD | 57 | 56 | 60 | 67 | 26 | 23 | 34 | 18 | 33 |
| TD | 27 | 41 | 13 | 9 | 23 | 27 | 30 | 31 | |
| Tear Strength, kN/m | | | | | | | | | |
| MD | 9.28 | 5.78 | 7.01 | 3.85 | 2.28 | 5.08 | 6.30 | 5.60 | 5.08 |
| TD | 4.90 | 4.90 | 7.01 | 8.23 | 7.53 | 1.93 | 4.38 | 4.55 | 4.73 |
| Gurley Air Flow, sec/100cc | 47 | 45 | 40 | 29 | 32 | 28 | 37 | 28 | 36 |
| Mullens Hydrostatic, kPa | 483 | 434 | 490 | 448 | 476 | 503 | 496 | 434 | 510 |
| MVTR, $g/m^2 day$ | 935 | | | | | | 878 | 963 | |
| Methanol Bubble Point Pressure, kPa | 290 | 276 | 296 | 234 | 145 | 276 | | 55 | 317 |
| Maximum Limiting Pore Diameter, $\mu m$ | 0.077 | 0.081 | 0.075 | 0.095 | 0.154 | 0.081 | | 0.406 | 0.070 |
| Maximum Pore Diameter, $\mu m$ | | | | | | | 155 | | |
| Volume Average Pore Diameter, $\mu m$ | | | | | | | | | |
| Heat Shrinkage after 1 hr at 100°C., % | | | | | | | | | |
| MD | 19.0 | | 9.4 | 12.0 | | 19.3 | 24.1 | 21.2 | |
| TD | 23.2 | | 22.5 | 28.3 | | 25.7 | 29.1 | 30.8 | |

Table VI
Properties of Biaxially Stretched Microporous Materials
Produced from Microporous Sheet of Example 2

| Example No. | 17 | 18 | 19 | 20 | 21 | 22 | 23 | 24 | 25 |
|---|---|---|---|---|---|---|---|---|---|
| Thickness, mm | 0.203 | 0.152 | 0.191 | 0.140 | 0.152 | 0.152 | 0.102 | 0.114 | 0.203 |
| Stretch Ratio | | | | | | | | | |
| MD | 2 | 2 | 2 | 2 | 2 | 3 | 3 | 3 | 3 |
| TD | 2.5 | 3 | 3 | 3 | 4 | 3 | 3 | 3 | 4 |
| Line Speed m/min | 24.4 | 24.4 | 24.4 | 24.4 | 15.2 | 24.4 | 24.4 | 24.4 | 15.2 |
| MDS Preheat Temp., °C | 104 | 104 | 121 | 79 | 121 | 104 | 121 | 79 | 121 |
| TDS Zone Temp., °C | | | | | | | | | |
| Preheat | 177 | 177 | 149 | 149 | 149 | 177 | 149 | 149 | 149 |
| Stretch I | | | | | | | | | |
| 177-166-177 | X | X | | | | X | | | |
| 193-182-193 | | | X | X | X | | X | X | X |
| Stretch II | | | | | | | | | |
| 149-127-149 | X | X | | | | X | | | |
| 149-149-149 | | | | X | | | X | | |
| 149-135-149 | | | X | | X | | | X | X |
| Sinter I | | | | | | | | | |
| 149-127-149 | X | X | | | | X | | | |
| 149-149-149 | | | | X | | | X | | |
| 149-135-149 | | | | | X | | | | X |
| 204-191-204 | | | X | | | | | X | |
| Sinter II | | | | | | | | | |
| 232-204-232 | X | X | | | | X | | | |
| 260-246-260 | | | X | | X | | X | | X |
| 316-316-316 | | | | X | | | | X | |
| Weight, g/m$^2$ | 44 | 24 | | | 24 | 17 | | | 31 |
| Porosity, vol% | 86 | 90 | | | 90 | 92 | | | 90 |
| Matrix Tensile Strength, MPa | | | | | | | | | |
| MD | 52.94 | 61.50 | | | 36.61 | 96.18 | | | 37.23 |
| TD | 44.47 | 67.98 | | | 109.54 | 54.39 | | | 117.21 |

Table VI (continued)
Properties of Biaxially Stretched Microporous Materials
Produced from Microporous Sheet of Example 2

| Example No. | 17 | 18 | 19 | 20 | 21 | 22 | 23 | 24 | 25 |
|---|---|---|---|---|---|---|---|---|---|
| Elongation at Break, % | | | | | | | | | |
| MD | 58 | 54 | 25 | 41 | 87 | 31 | 13 | 19 | 111 |
| TD | 51 | 39 | 15 | 16 | 9 | 42 | 16 | 16 | 7 |
| Tear Strength, kN/m | | | | | | | | | |
| MD | 20.3 | 12.61 | 17.51 | 6.13 | 13.13 | 12.26 | 8.41 | 5.95 | 18.56 |
| TD | 13.31 | 12.78 | 21.02 | 7.18 | 11.03 | 9.11 | 5.25 | 7.53 | 19.44 |
| Gurley Air Flow, sec/100cc | 81 | 40 | | | 46 | 45 | | | 52 |
| Mullens Hydrostatic, kPa | 745 | 689 | 676 | 496 | 745 | 717 | 641 | 503 | 703 |
| MVTR, $g/m^2$day | | | 868 | 761 | | 947 | 913 | 827 | |
| Methanol Bubble Point Pressure, kPa | 290 | 303 | | | 303 | 365 | | | 290 |
| Maximum Limiting Pore Diameter, $\mu$m | 0.077 | 0.074 | | | 0.074 | 0.061 | | | 0.077 |
| Maximum Pore Diameter, $\mu$m | | 111 | | | | > 146 | | | |
| Volume Average Pore Diameter, $\mu$m | | 7.13 | | | | 4.70 | | | |
| Heat Shrinkage after 1 hr at 100°C., % | | | | | | | | | |
| MD | 11.7 | | 3.8 | 7.1 | 12.3 | | 15.3 | 6.3 | 7.7 |
| TD | 24.4 | | 23.6 | 11.8 | 22.0 | | 34.1 | 18.9 | 21.5 |

Table VII
Properties of Biaxially Stretched Microporous Sheets
Produced from Microporous Sheet of Example 3

| Example No. | 26 | 27 | 28 | 29 |
|---|---|---|---|---|
| Thickness, mm | 0.178 | 0.102 | 0.127 | 0.102 |
| Stretch Ratio | | | | |
| MD | 2 | 2 | 3 | 3 |
| TD | 3 | 3 | 3 | 3 |
| Line Speed, m/min | 24.4 | 24.4 | 24.4 | 24.4 |
| MDS Preheat Temp., °C | 79 | 79 | 79 | 79 |
| TDS Zone Temp., °C | | | | |
| Preheat | 177 | 149 | 177 | 177 |
| Stretch I | | | | |
| 177-166-277 | X | | X | X |
| 193-182-193 | | X | | |
| Stretch II, Sinter I | | | | |
| 149-127-149 | X | | X | X |
| 149-149-149 | | X | | |
| Sinter II | | | | |
| 232-204-232 | X | | X | X |
| 260-260-260 | | X | | |
| Weight, g/m$^2$ | 27 | 10 | 20 | 27 |
| Porosity, vol% | 90 | 91 | 90 | 92 |
| Matrix Tensile Strength, MPa | | | | |
| MD | 29.58 | 52.94 | 77.84 | 109.89 |
| TD | 117.76 | 44.43 | 32.96 | 39.91 |
| Elongation at Break, % | | | | |
| MD | 90 | 47 | 27 | 17 |
| TD | 9 | 24 | 32 | 30 |
| Tear Strength, kN/m | | | | |
| MD | 15.41 | 10.51 | 15.24 | 7.18 |
| TD | 21.02 | 5.43 | 4.20 | 3.50 |

### Table VII (continued)
### Properties of Biaxially Stretched Microporous Sheets
### Produced from Microporous Sheet of Example 3

| Example No. | 26 | 27 | 28 | 29 |
|---|---|---|---|---|
| Gurley Air Flow, sec/100cc | 56 | 33 | | 36 |
| Mullens Hydrostatic, kPa | 552 | 655 | 641 | 586 |
| MVTR, $g/m^2$day | 843 | 815 | 862 | 982 |
| Methanol Bubble Point Pressure, kPa | 303 | 276 | | 317 |
| Maximum Limiting Pore Diameter,$\mu$ m | 0.074 | 0.081 | | 0.070 |
| Heat Shrinkage after 1 hr at 100°C, % | | | | |
| MD | 24.1 | 16.5 | 26.4 | |
| TD | 40.1 | 31.4 | 34.8 | |

Corona Treatment of Microporous Sheet

A portion of the roll stock of Example 1 and a portion of the roll stock of Example 1A were corona-treated using conventional procedures and equipment for corona treating plastic film.

Conventional Offset Lithographic Printing of Microporous Material Substrates

Several of the microporous material substrates described above were cut into sheets and printed by conventional offset lithographic printing techniques using a sheet-fed offset lithographic printing press. Three different lithographic inks were used, namely, an oil-based ink (CML Oil Base Plus), a rubber-based ink (Rubber Base Plus), and a third ink (Tough-tex™). All inks were obtained from Van Son Holland Ink Corporation of America. A correlation of the microporous material substrates with the inks used in printing on the substrates is shown by the X's in Table VIII.

TABLE VIII

| Correlation of Microporous Substrates and Lithographic Inks | | | | |
|---|---|---|---|---|
| Example | Substrate Example | CML Oil Base Plus | Rubber Base Plus | Toughtex |
| 30 | 1 | | X | |
| 31 | 1 (corona treated) | | X | |
| 32 | 1A | X | X | X |
| 33 | 1A (corona treated) | | X | |
| 34 | 4 | | X | |
| 35 | 5 | X | X | X |
| 36 | 6 | | X | |
| 37 | 7 | | X | |

The quality of the printed images was assessed by viewing the surfaces and cross-sections through printed areas under a 60X microscope fitted with a reticle. The reticle was calibrated in 0.001 inches (0.024 mm). With all printed microporous material substrates and all three inks, good resolution of dots in halftone images was obtained. Dot sizes as small as 0.07 millimeter were fully covered and very circular. Line widths of 0.1 millimeter exhibited uniform coverage and good edge definition. The ink coverage of all three inks was more uniform on the uncoated microporous material substrates than on uncoated paper. With paper substrates, all three of the tested inks coated the uppermost fibers of the surface, leaving significant uncoated areas where the fibers were slightly beneath the level of the uppermost fibers.

All of the microporous material substrate and ink combinations tested exhibited rapid dry times and were characterized by the lack of offset, that is, ink from the printed surface of one sheet did not transfer to the back of the next sheet printed as the sheets were stacked in the output tray of the press.

Ink Jet Printing of Microporous Material Substrates

Microporous material substrates of Example 1, Example 1 (corona treated) and Example 4 were printed by conventional ink jet printing techniques using a Hewlett-Packard Think-Jet® printer and water-based ink jet printing ink (Hewlett Packard, Black, Part No. 92261A). For control, the recommended paper (Hewlett Packard Ink-Jet Paper, Reorder No. 92261N, Mode 1186) was also used as a substrate. The printer delivers 96 dots per inch (38 dots per millimeter) in both the vertical and the horizontal directions. With all of the microporous material substrates tested, good resolution of the ink dots was seen. Each dot was found to be a separated image relatively circular in outline. No splatter of ink around the primary dots was observed. The ink dots on the paper substrate were found to be large enough that adjacent dots touched. The results of microscopic examination of the printed substrates using the 60X microscope described above, are shown in Table IX.

TABLE IX

| Microscopic Examination of Ink Jet Printed Substrates | | | |
|---|---|---|---|
| Example | Substrate Example | Average Dot Diameter, mm | Average Dot Depth,mm |
| 38 | 1 | 0.13 - 0.15 | 0.03 |
| 39 | 1 (corona treated) | 0.13 - 0.18 | 0.03 |
| 40 | 4 | 0.13 - 0.18 | 0.05 |
| Control | Paper | 0.25 - 0.33 | 0.05 |

Rubber Stamp Printing of Microporous Material Substrates

Using approximately equal pressure, microporous material substrates of Examples 9, 10, 15, 17, 18, 21, 26, and 27 and a paper substrate were printed using a Multimax self-inking rubber stamp. The printed substrates were tested for ink dryness by rubbing with a finger. The ink on all of the printed microporous substrates was found to be dry in less than a minute after printing, whereas the ink on the printed paper substrate was found to be wet one minute after printing.

Although the present invention has been described with reference to specific details of certain embodiments thereof, it is not intended that such details should be regarded as limitations upon the scope of the invention except insofar as they are included in the accompanying claims.

**Claims**

**1.** Printed microporous material comprising :
    (a) a microporous material substrate having at least one surface and comprising :
        (1) a matrix comprising essentially linear ultrahigh molecular weight polyolefin which is essentially linear ultrahigh molecular weight polyethylene having an intrinsic viscosity of at least 18 deciliters/gram, essentially linear ultrahigh molecular weight polypropylene having an intrinsic viscosity of at least 6 deciliters/gram, or a mixture thereof,
        (2) finely divided particulate substantially waterinsoluble siliceous filler distributed throughout said matrix, said filler constituting from 50 percent to 90 percent by weight of said microporous material substrate, and

20

(3) a network of interconnecting pores communicating throughout said microporous material substrate, said pores constituting at least 35 percent by volume of said microporous material substrate, and

(b) printing ink on at least a portion of said surface in the form of indicea, one or more patterns, one or more designs, or a combination thereof.

2. The printed microporous material of Claim 1 wherein said essentially linear ultrahigh molecular weight polyolefin is essentially linear ultrahigh molecular weight polyethylene having an intrinsic viscosity of at least 18 deciliters/gram.

3. The printed microporous material of Claim 2 wherein said ultrahigh molecular weight polyethylene has an intrinsic viscosity in the range of from 18 to 39 deciliters/gram.

4. The printed microporous material of any of Claims 1 to 3 wherein said pores constitute at least 60 percent by volume of said microporous material substrate.

5. The printed microporous material of any of Claims 1 to 4 wherein said filler constitutes from 50 percent to 85 percent by weight of said microporous material substrate.

6. The printed microporous material of any of Claims 1 to 5 wherein said filler is silica.

7. The printed microporous material of Claim 6 wherein said silicea is precipitated silica.

8. The printed microporous material of Claim 7 wherein said precipitated silica has an average ultimate particle size of less than 0.1 micrometer.

9. The printed microporous material of any of Claims 1 to 8 wherein the volume average diameter of said pores as determined by mercury porosimetry is in the range of from 0.02 to 50 micrometers.

10. The printed microporous material of any of Claims 1 to 8 wherein the volume average diameter of said pores as determined by mercury porosimetry is in the range of from 0.02 to 0.5 micrometers.

11. The printed microporous material of any of Claims 1 to 10 wherein said printing ink is a lithographic printing ink.

12. The printed microporous material of any of Claims 1 to 10 wherein said printing ink is an offset lithographic printing ink.

13. The printed microporous material of any of Claims 1 to 10 wherein said printing ink is a letterpress printing ink.

14. The printed microporous material of any of Claims 1 to 10 wherein the printing ink is a water-based ink jet printing ink.

15. The printed microporous material of Claim 14 wherein said ink jet printing ink is on a portion of said surface in the form of a bar code pattern.

16. A method for producing printed microporous material comprising printing printing ink upon at least one surface of a microporous material substrate wherein said microporous material substrate comprises :

(a) a matrix comprising essentially linear ultrahigh molecular weight polyolefin which is essentially linear ultrahigh molecular weight polyethylene having an intrinsic viscosity of at least 18 deciliters/gram, essentially linear ultrahigh molecular weight polypropylene having an intrinsic viscosity of at least 6 deciliters/gram, or a mixture thereof,

(b) finely divided particulate substantially waterinsoluble siliceous filler distributed throughout said matrix, said filler constituting from 50 percent to 90 percent by weight of said microporous material substrate, and

(c) a network of interconnecting pores communicating throughout said microporous material substrate, said pores constituting at least 35 percent by volume of said microporous material substrate.

17. The method of Claim 16 wherein said essentially linear ultrahigh molecular weight polyolefin is essentially linear ultrahigh molecular weight polyethylene having an intrinsic viscosity of at least 18 deciliters/gram.

18. The method of Claim 17 wherein said ultrahigh molecular weight polyethylene has an intrinsic viscosity in the range of from 18 to 39 deciliters/gram.

19. The method of any of Claims 16 to 18 wherein said pores constitute at least 60 percent by volume of said microporous material substrate.

20. The method of any of Claims 16 to 19 wherein said filler constitutes from 50 to 85 percent by weight of said microporous material substrate.

21. The method of any of Claims 16 to 20 wherein said filler is silica.

22. The method of Claim 21 wherein said silicea is precipitated silica.

23. The method of Claim 22 wherein said precipitated silica has an average ultimate particle size of less than 0.1 micrometer.

24. The method of any of Claims 16 to 23 wherein the volume average diameter of said pores as determined by mercury porosimetry is in the range of from 0.02 to 50 micrometers.

25. The method of any of Claims 16 to 23 wherein the volume average diameter of said pores as determined by mercury porosimetry is in the range of from 0,02 to 0.5 micrometers.

26. The method of any of Claims 16 to 25 wherein said printing is accomplished by lithography and wherein said printing ink is a lithographic printing ink.

27. The method of any of Claims 16 to 25 wherein said printing is accomplished by offset lithography and wherein said printing ink is an offset lithographic printing ink.

28. The method of any of Claims 16 to 25 wherein said printing is accomplished by letterpress printing and wherein said printing ink is a letterpress printing ink.

29. The method of any of Claims 16 to 25 wherein said printing is accomplished by ink jet printing and wherein said printing ink is a water-based ink jet printing ink.

30. The method of Claim 29 wherein said ink jet printing ink is printed upon said surface of said microporous material substrate in the form of a bar code.

**Revendications**

1. Matière microporeuse imprimée comprenant :
    (a) un substrat en matière microporeuse possédant au moins une surface et comprenant :
        (1) une matrice comprenant une polyoléfine essentiellement linéaire de masse moléculaire ultra-élevée, qui est un polyéthylène essentiellement linéaire de masse moléculaire ultra-élevée ayant une viscosité intrinsèque d'au moins 18 décilitres/gramme, un polypropylène essentiellement linéaire de masse moléculaire ultra-élevée ayant une viscosité intrinsèque d'au moins 6 décilitres/gramme, ou un mélange de ceux-ci,
        (2) une charge siliceuse particulaire pratiquement insoluble dans l'eau, finement divisée, distribuée dans toute ladite matrice, ladite charge constituant de 50% à 90% en poids dudit substrat de matière microporeuse, et
        (3) un réseau de pores interconnectés communiquant dans tout ledit substrat de matière microporeuse, lesdits pores constituant au moins 35% en volume dudit substrat de matière microporeuse, et
    (b) de l'encre d'imprimerie au moins sur une partie de ladite surface, sous forme de signes, d'un ou plusieurs motifs, d'un ou plusieurs dessins, ou d'une combinaison de ceux-ci.

2. Matière microporeuse imprimée selon la revendication 1, dans laquelle ladite polyoléfine essentiellement linéaire de masse moléculaire ultra-élevée est un polyéthylène essentiellement linéaire de masse moléculaire ultra-élevée ayant une viscosité intrinsèque d'au moins 18 décilitres/gramme.

3. Matière microporeuse imprimée selon la revendication 2, dans laquelle ledit polyéthylène essentiellement linéaire de masse moléculaire ultra-élevée a une viscosité intrinsèque dans la gamme de 18 à 39 décilitres/gramme.

4. Matière microporeuse imprimée selon l'une quelconque des revendications 1 à 3, dans laquelle lesdits pores constituent au moins 60% en volume dudit substrat de matière microporeuse.

5. Matière microporeuse imprimée selon l'une quelconque des revendications 1 à 4, dans laquelle ladite charge constitue de 50% à 85% en poids dudit substrat de matière microporeuse.

6. Matière microporeuse imprimée selon l'une quelconque des revendications 1 à 5, dans laquelle ladite charge est de la silice.

7. Matière microporeuse imprimée selon la revendication 6, dans laquelle ladite silice est de la silice précipitée.

8. Matière microporeuse imprimée selon la revendication 7, dans laquelle ladite silice précipitée a une granulométrie ultime moyenne inférieure à 0,1 $\mu$m.

9. Matière microporeuse imprimée selon l'une quelconque des revendications 1 à 8, dans laquelle le diamètre moyen en volume desdits pores, déterminé par porosimétrie au mercure, est dans la gamme de 0,02 à 50 $\mu$m.

10. Matière microporeuse imprimée selon l'une quelconque des revendications 1 à 8, dans laquelle le diamètre moyen en volume desdits pores, déterminé par porosimétrie au mercure, est dans la gamme de 0,02 à 0,5 $\mu$m.

11. Matière microporeuse imprimée selon l'une quelconque des revendications 1 à 10, dans laquelle ladite encre d'imprimerie est une encre d'imprimerie lithographique.

12. Matière microporeuse imprimée selon l'une quelconque des revendications 1 à 10, dans laquelle ladite encre d'imprimerie est une encre d'imprimerie lithographique offset.

13. Matière microporeuse imprimée selon l'une quelconque des revendications 1 à 10, dans laquelle ladite encre d'imprimerie est une encre d'imprimerie pour machine à copier.

14. Matière microporeuse imprimée selon l'une quelconque des revendications 1 à 10, dans laquelle ladite encre d'imprimerie est une encre d'imprimerie pour jet d'encre à base d'eau.

15. Matière microporeuse imprimée selon la revendication 14, dans laquelle ladite encre d'imprimerie pour jet d'encre se trouve sur une partie de ladite surface sous forme d'un dessin de code à barres.

16. Procédé pour produire une matière microporeuse imprimée, comprenant l'impression d'une encre d'imprimerie sur au moins une surface d'un substrat de matière microporeuse, dans lequel ledit substrat de matière microporeuse comprend :

(a) une matrice comprenant une polyoléfine essentiellement linéaire de masse moléculaire ultra-élevée, qui est un polyéthylène essentiellement linéaire de masse moléculaire ultra-élevée ayant une viscosité intrinsèque d'au moins 18 décilitres/gramme, un polypropylène essentiellement linéaire de masse moléculaire ultra-élevée ayant une viscosité intrinsèque d'au moins 6 décilitres/gramme, ou un mélange de ceux-ci,

(b) une charge siliceuse particulaire pratiquement insoluble dans l'eau, finement divisée, distribuée dans toute ladite matrice, ladite charge constituant de 50% à 90% en poids dudit substrat de matière microporeuse, et

(c) un réseau de pores interconnectés communiquant dans tout ledit substrat de matière micropo-

23

reuse, lesdits pores constituant au moins 35% en volume dudit substrat de matière microporeuse.

17. Procédé selon la revendication 16, dans lequel ladite polyoléfine essentiellement linéaire de masse moléculaire ultra-élevée est un polyéthylène essentiellement linéaire de masse moléculaire ultra-élevée ayant une viscosité intrinsèque d'au moins 18 décilitres/gramme.

18. Procédé selon la revendication 17, dans lequel ledit polyéthylène essentiellement linéaire de masse moléculaire ultra-élevée a une viscosité intrinsèque dans la gamme de 18 à 39 décilitres/gramme.

19. Procédé selon l'une quelconque des revendications 16 à 18, dans lequel lesdits pores constituent au moins 60% en volume dudit substrat de matière microporeuse.

20. Procédé selon l'une quelconque des revendications 16 à 19, dans lequel ladite charge constitue de 50 à 85% en poids dudit substrat de matière microporeuse.

21. Procédé selon l'une quelconque des revendications 16 à 20, dans lequel ladite charge est de la silice.

22. Procédé selon la revendication 21, dans lequel ladite silice est de la silice précipitée.

23. Procédé selon la revendication 22, dans lequel ladite silice précipitée a une granulométrie ultime moyenne inférieure à 0,1 $\mu$m.

24. Procédé selon l'une quelconque des revendications 16 à 23, dans lequel le diamètre moyen en volume desdits pores, déterminé par porosimétrie au mercure, est dans la gamme de 0,02 à 50 $\mu$m.

25. Procédé selon l'une quelconque des revendications 16 à 23, dans lequel le diamètre moyen en volume desdits pores, déterminé par porosimétrie au mercure, est dans la gamme de 0,02 à 0,5 $\mu$m.

26. Procédé selon l'une quelconque des revendications 16 à 25, dans lequel ladite impression est réalisée par lithographie et dans lequel ladite encre d'imprimerie est une encre d'imprimerie lithographique.

27. Procédé selon l'une quelconque des revendications 16 à 25, dans lequel ladite impression est réalisée par lithographie offset et dans lequel ladite encre d'imprimerie est une encre d'imprimerie lithographique offset.

28. Procédé selon l'une quelconque des revendications 16 à 25, dans lequel ladite impression est réalisée par impression par machine à copier et dans lequel ladite encre d'imprimerie est une encre d'imprimerie pour machine à copier.

29. Procédé selon l'une quelconque des revendications 16 à 25, dans lequel ladite impression est réalisée par impression à jeu d'encre et dans lequel ladite encre d'imprimerie est une encre d'imprimerie pour jet d'encre à base d'eau.

30. Procédé selon la revendication 29, dans lequel ladite encre d'imprimerie pour jet d'encre est imprimée sur ladite surface dudit substrat de matière microporeuse sous forme d'un code à barres.

**Patentansprüche**

1. Bedrucktes mikroporöses Material, enthaltend
   (a) ein mikroporöses Trägermaterial mit mindestens einer Oberfläche und enthaltend:
   (1) eine Matrix, die im wesentlichen lineares Polyolefin mit extrem hohem Molekulargewicht enthält, das im wesentlichen lineares Polyethylen mit extrem hohem Molekulargewicht mit einer Strukturviskosität von mindestens 18 Deciliter/Gramm, im wesentlichen lineares Polypropylen mit extrem hohem Molekulargewicht mit einer Strukturviskosität von mindestens 6 Deciliter/Gramm oder eine Mischung derselben ist,
   (2) fein verteilte Teilchen im wesentlichen wasserunlöslichen, kieselsäurehaltigen Füllstoffes in der Matrix verteilt, wobei der Füllstofff von 50 % bis 90 Gew.-% des mikroporösen Trägermaterials ausmacht, und

(3) ein Netzwerk von sich durch das mikroporöse Trägermaterial erstreckender, miteinander verbundener Poren im mikroporösen Trägermaterial, wobei die Poren mindestens 35 Volumenpozent des mikroporösen Trägermaterials ausmachen, und

(b) Druckfarbe auf mindestens einem Teil der Oberfläche in Form von Zeichen, einem oder mehreren Mustern, einem oder mehreren Zeichnungen oder einer Kombination derselben.

2. Bedrucktes mikroporöses Material nach Anspruch 1,
**dadurch gekennzeichnet,**
daß das im wesentlichen lineare Polyolefin mit extrem hohem Molekulargewicht im wesentlichen lineares Polyethylen mit extrem hohem Molekulargewicht mit einer Strukturviskosität von mindestens 18 Deciliter/Gramm ist.

3. Bedrucktes mikroporöses Material nach Anspruch 2,
**dadurch gekennzeichnet,**
daß das Polyethylen mit extrem hohem Molekulargewicht eine Strukturviskosität im Bereich von 18-39 Deciliter/Gramm aufweist.

4. Bedrucktes mikroporöses Material nach jedem der Ansprüche 1-3,
**dadurch gekennzeichnet,**
daß die Poren mindestens 60 Volumenprozent des mikroporösen Trägermaterials ausmachen.

5. Bedrucktes mikroporöses Material nach jedem der Ansprüche 1-4,
**dadurch gekennzeichnet,**
daß der Füllstoff von 50 % bis 85 Gew.-% des mikroporösen Trägermaterials ausmacht.

6. Bedrucktes mikroporöses Material nach jedem der Ansprüche 1-5,
**dadurch gekennzeichnet,**
daß der Füllstoff Kieselsäure ist.

7. Bedrucktes mikroporöses Material nach Anspruch 6,
**dadurch gekennzeichnet,**
daß die Kieselsäure gefällte Kieselsäure ist.

8. Bedrucktes mikroporöses Material nach Anspruch 7,
**dadurch gekennzeichnet,**
daß die gefällte Kieselsäure eine mittlere Höchstteilchengröße von kleiner als 0,1 $\mu$m aufweist.

9. Bedrucktes mikroporöses Material nach jedem der Ansprüche 1-8,
**dadurch gekennzeichnet,**
daß der volumenmittlere Durchmesser der Poren, bestimmt durch Quecksilberporosimetrie, im Bereich von 0,02-50 $\mu$m beträgt.

10. Bedrucktes mikroporöses Material nach jedem der Ansprüche 1-8,
**dadurch gekennzeichnet,**
daß der volumenmittlere Durchmesser der Poren, bestimmt durch Quecksilberporosimetrie, im Bereich von 0,02-0,5 $\mu$m beträgt.

11. Bedrucktes mikroporöses Material nach jedem der Ansprüche 1-10,
**dadurch gekennzeichnet,**
daß die Druckfarbe eine Steindruckfarbe ist.

12. Bedrucktes mikroporöses Material nach jedem der Ansprüche 1-10,
**dadurch gekennzeichnet,**
daß die Druckfarbe eine Offsetdruckfarbe ist.

13. Bedrucktes mikroporöses Material nach jedem der Ansprüche 1-10,
**dadurch gekennzeichnet,**
daß die Druckfarbe eine Buchdruckfarbe ist.

**14.** Bedrucktes mikroporöses Material nach jedem der Ansprüche 1-10,
**dadurch gekennzeichnet,**
daß die Druckfarbe eine auf Wasser basierende Tintenstrahldruckfarbe ist.

**15.** Bedrucktes mikroporöses Material nach Anspruch 14,
**dadurch gekennzeichnet,**
daß die Tintenstrahldruckfarbe auf einem Teil der Oberfläche in Form eines Kodierstreifenmusters vorhanden ist.

**16.** Verfahren zum Herstellen bedruckten mikroporösen Materials durch Bedrucken mindestens einer Oberfläche des mikroporösen Trägermaterials mit Druckfarbe, wobei das mikroporöse Trägermaterial enthält
(a) eine Matrix, die im wesentlichen lineares Polyolefin mit extrem hohem Molekulargewicht enthält, das im wesentlichen lineares Polyethylen mit extrem hohem Molekulargewicht mit einer Strukturviskosität von mindestens 18 Deciliter/Gramm, im wesentlichen lineares Polypropylen mit extrem hohem Molekulargewicht mit einer Strukturviskosität von mindestens 6 Deciliter/Gramm oder eine Mischung derselben ist,
(b) fein verteilte Teilchen im wesentlichen wasserunlöslichen, kieselsäurehaltigen Füllstoffes in der Matrix verteilt, wobei der Füllstofff von 50 % bis 90 Gew.-% des mikroporösen Trägermaterials ausmacht, und
(c) ein Netzwerk von sich durch das mikroporöse Trägermaterial erstreckender, miteinander verbundener Poren im mikroporösen Trägermaterial, wobei die Poren mindestens 35 Volumenpozent des mikroporösen Trägermaterials ausmachen.

**17.** Verfahren nach Anspruch 16,
**dadurch gekennzeichnet,**
daß das im wesentlichen lineare Polyolefin mit extrem hohem Molekulargewicht im wesentlichen lineares Polyethylen mit extrem hohem Molekulargewicht mit einer Strukturviskosität von mindestens 18 Deciliter/Gramm ist.

**18.** Verfahren nach Anspruch 17,
**dadurch gekennzeichnet,**
daß das Polyethylen mit extrem hohem Molekulargewicht eine Strukturviskosität im Bereich von 18-39 Deciliter/Gramm aufweist.

**19.** Verfahren nach jedem der Ansprüche 16-18,
**dadurch gekennzeichnet,**
daß die Poren mindestens 60 Volumenprozent des mikroporösen Trägermaterials ausmachen.

**20.** Verfahren nach jedem der Ansprüche 16-19,
**dadurch gekennzeichnet,**
daß der Füllstoff von 50 % bis 85 Gew.-% des mikroporösen Trägermaterials ausmacht.

**21.** Verfahren nach jedem der Ansprüche 16-20,
**dadurch gekennzeichnet,**
daß der Füllstoff Kieselsäure ist.

**22.** Verfahren nach Anspruch 21,
**dadurch gekennzeichnet,**
daß die Kieselsäure gefällte Kieselsäure ist.

**23.** Verfahren nach Anspruch 22,
**dadurch gekennzeichnet,**
daß die gefällte Kieselsäure eine mittlere Höchstteilchengröße von kleiner als 0,1 $\mu$m aufweist.

**24.** Verfahren nach jedem der Ansprüche 16-23,
**dadurch gekennzeichnet,**
daß der volumenmittlere Durchmesser der Poren, bestimmt durch Quecksilberporosimetrie, im Bereich von 0,02-50 $\mu$m beträgt.

25. Verfahren nach jedem der Ansprüche 16-23,
**dadurch gekennzeichnet,**
daß der volumenmittlere Durchmesser der Poren, bestimmt durch Quecksilberporosimetrie, im Bereich von 0,02-0,5 $\mu$m beträgt.

26. Verfahren nach jedem der Ansprüche 16-25,
**dadurch gekennzeichnet,**
daß das Drucken durch Steindruck erfolgt und wobei die Druckfarbe eine Steindruckfarbe ist.

27. Verfahren nach jedem der Ansprüche 16-25,
**dadurch gekennzeichnet,**
daß das Drucken mit Offsetdruck erfolgt und die Druckfarbe eine Offsetdruckfarbe ist.

28. Verfahren nach jedem der Ansprüche 16-25,
**dadurch gekennzeichnet,**
daß das Drucken durch Buchdruck erfolgt und die Druckfarbe eine Buchdruckfarbe ist.

29. Verfahren nach jedem der Ansprüche 16-25,
**dadurch gekennzeichnet,**
daß das Drucken mit Tintenstrahldruck erfolgt und die Druckfarbe eine auf Wasser basierende Tintenstrahldruckfarbe ist.

30. Verfahren nach Anspruch 29,
**dadurch gekennzeichnet,**
daß die Tintenstrahldruckfarbe auf die Oberfläche des mikroporösen Trägermaterials in Form einer Streifenkodierung aufgedruckt wird.